# EUROPEAN PATENT APPLICATION

(11) **EP 1 128 287 A2**
(43) Date of publication of application: **29.08.2001**
(21) Application number: 01301507.8
(22) Date of filing: 20.02.2001
(51) Int. Cl.: G06F 17/30

(54) **Indexation system for electronic addresses**

(30) Priority: 22.02.2000 GB 0004190
(71) Applicant: Game, Douglas James, Stanford-le-Hope, Essex SS17 0EN (GB)
(72) Inventor: Game, Douglas James, Stanford-le-Hope, Essex SS17 0EN (GB)
(74) Representative: Jehan, Robert

(57) **Abstract**

An indexation system includes virtual address means for providing a virtual address of a trading entity, physical location means operable to provide data relating to a physical location associated with that entity and means for searching one or the other of the virtual and physical addresses and means provide the other of the virtual and physical addresses. The preferred embodiment allows Internet web site addresses to be indexed so as to provide the easy location by a combination of some or all of geographical district, telephone area code, organisation/individual name, trade or service category and for attachment of any amount of information relating to that address. Thus, the customer has the convenience of being able to view all the site addresses to which any interest is expressed by organisation/individual name, trade category, location or telephone area code as well as a number of other criterion.

## Description

The present invention relates to an indexation system for locating electronic addresses, for example the details of organisations/individuals, particularly Internet web sites based on geographical location, business/service type and telephone area code and other associated information.

The lack of an efficient and convenient system to locate an unknown Internet web site address (URL) is a major factor effecting the convenience and efficiency of electronic commercial transactions.

Internet addresses can range from the descriptive and easy to recall to very long and complex addresses that are difficult for Internet users to remember or locate. Organisations/individuals investing in Internet domain names aligned with their organisation/individual name or activity do not necessarily make the location of their web address any easier to users who are seeking the details of an organisation/individual that/who is proximate to them.

No pattern or standard has been set for the structure of Internet web addresses which would allow easy indexing and location by people wanting to find a site based on it's location, business sector or associated with a particular telephone area code. This is in marked contrast to the world's telephonic systems where the number (address) is allocated centrally according to a national pattern. The referencing information attached to this telephone number is also collected in a uniform way.

This standardization allows indexing by district or name and address and can be made available to potential users of the telephonic system in a variety of convenient ways. In particular for commercial, trade, service or professional requirements it allows the production of a business or trade directory. It is an every day expectation to be able to locate easily a telephone number by one of these methods in order to fulfill a need.

Currently, search mechanisms on the Internet rely on the indexing of non specific text collected from web sites or alternatively by indexing the 'Meta Tags' which are embedded in some, but not all, web pages. Without correct use of 'Meta Tags' the Internet search engines that index these tags are unable to attach any geographic significance to the web address, it's business sector or phone area code.

The limitations of current Internet search technology and the indexes made by them cause very large and difficult to use stores of information to be created that are difficult to navigate and use effectively.

The present invention seeks to provide an indexation system for virtual addresses such as e-mail and Internet web sites.

According to an aspect of the present invention, there is provided an indexation system as specified in claim 1.

The preferred embodiment allows Internet web site addresses to be indexed so as to provide the easy location by a combination of some or all of geographical district, telephone area code, organisation/individual name, trade or service category and for attachment of any amount of information relating to that address.

In this way organisation/individuals with a presence on the Internet can much more easily attract customers to their site/s. Moreover, the customer has the convenience of being able to view all the site addresses to which any interest is expressed by organisation/individual name, trade category, location or telephone area code as well as a number of other criterion.

The preferred embodiment has the advantage of being able to attract new customers from retailers who were previously feeling very threatened by the emerging new Internet commerce. Since the preferred master addresses can be indexed by geographic location as well as by trade, service or product, customers can for the first time search their local retail shopping outlets, of whom they have experience, within their own district for the availability of the desired item for purchase. Once located, the customer can then easily go to see the value, quality, colour, texture and suitability of the product in the retail outlet itself, this saves the customer a great deal of time searching from shop to shop in order to locate a specific product. Of course, electronic commerce is still available but the customers who wish to see the product prior to purchase is catered for. In this way, Internet trading can become a reality for local commercial organizations, who can still offer the convenience of home shopping combined with their special skills as a local trader or service provider.

An embodiment of the present invention is described below, by way of example only, with reference to the accompanying drawings, in which:
Figure 1 is a schematic diagram of an embodiment of search facility;
Figure 2 is a schematic diagram of an embodiment of results display.

The described embodiment is directed to the Internet but could equally be applied to other electronic or virtual addresses which could be developed in the future.

The preferred embodiment combines organisation/individual details into an index system to allow easy searching for those details or a combination of those details to enable the location of organisation/individuals, goods and services.

The organisation/individual details will be collected from generally available sources of information and the index of these organisation/individuals created from it. The indexed information will be updated and added to by organisation/individuals who wish to have a more complete record of their organisation/services in the index.

All items of organisation/individual information will be added to the index where they are available but partial index entries will also be created.

It is envisaged that the creation of the indexing system could be carried out automatically by accessing a database of physical addresses or locations and associating one or more of the elements of the physical addresses or locations with the virtual address, that is Internet website address, e-mail address or the like. The apparatus required to perform this operation will be readily apparent to the skilled person from the teachings of the general principles disclosed herein.

The major usage for the master index created will be as a real time search system that can function as a stand-alone computer based application, an on-line electronic service or in a printed form. It is envisaged that this master index and supplier location system can be provided on-line such that users can access the information provided while using the Internet. In some cases users may know an Internet or web site address but may wish to find out more about the business such as its location, or may wish to deal only with a business at a particular location even if the transactions will be effected solely via the Internet.

### Index Creation

The details that are incorporated into the index system may include some or all of the following, but is not limited thereto:
*Organisation/individual Name*
*Alternative Organisation/individual Name 1*
*Alternative Organisation/individual Name 2*
*Trade, Profession or Service*
*Product Category*
*Geographic Location*
*Locator 1*
*Locator 2*
*Locator 3*
*Locator 4*
*Postal Code (or Country specific address locator code system)*
*Telephone Number*
*Fax Number*
*Telephone Area Code (or Country specific address locator code system)*
*Internet Domain Address*
*Free Format Organisation/individual Information*
*Information 1*
*Information 2*
*Information 3*
*Information 4*
*Information 5*
*Non-unique indicator*

The indexed information has the following attributes that feature in the above example index structure.

### Organisation/individual Name

The full legal name of the organisation/individual will be recorded as well as any other alternative names that are subsequently requested by the organisation/individual, this may be limited to two alternative names.
Organisation/individual names will be recorded as separate words in the index to allow searches to be conducted on partial organisation/individual names.

### Trade, Profession or Service

The Trades, Professions and Services that may be entered into the index are located in a list (not shown) which can be continuously updated as and when needed. The Trade, Profession and Services will be recorded in the index as an alphanumeric code, which is linked to the list of Trades, Professions and Services. The list of Trades, Professions and Services will be used to facilitate searching of the index of organisation/individual details.

### Product Categories

The list of indexed product categories will be created through the ongoing index generation process. The Product Categories will be recorded in the index as an alphanumeric code, which is linked to the list of Product Categories. This list in turn will be used to facilitate searching of the index of organisation/individual details.

### Geographical Location

A country or region specific list of locations will be used to select the geographical details that are indexed. This list in turn will be used to facilitate searching of the index of organisation/individual details. The address information from the organisation/individual details will be stored in three index items, 'locator 1', 'locator 2', 'locator 3' and 'locator 4'.

### Postal Code (or Country specific address locator code system)

The postal code of the business will be added to the index of organisation/individual details. All postal codes that are used in the process of generating the business information index will be recorded in a form that will facilitate searching of the organisation/individual details index.

### Telephone Number

The primary telephone number of the organisation/individual will be added to the index.

### Fax Number

The primary fax number of the organisation/individual will be added to the index.

### Telephone Area Code (or region specific portion of telephone number)

The telephone area code of the business will be added to the index of organisation/individual details. All telephone area codes that are used in the process of generating the business information index will be recorded in a form that will facilitate searching of the organisation/individual details index.

### Internet Domain Address

Any Internet domain used by an organisation/individual will be added to the index of organisation/individual details.

### Free Format Organisation/individual Information

Other important organisation/individual details may be recorded in the index of organisation/individual details. This information will take the form of up to five free format character based items of information that purport to the organisation/individual details. All free format information that is used in the process of generating the business information index will be recorded in a form that will facilitate searching of the organisation/individual details index

### Non-unique indicator

The majority of index entries will be unique due to the index construction, in the instance of an index entry not being unique, an additional numeric indicator will be added to the index record.

### The index format

An example of a master index record for an organisation/individual is as follows:

Organisation/individual information as presented:
Comasco Computer Services Ltd
Tall Trees
Herga Hyll
Orsett
Essex
RM16 3JA
Business category: Software development
Products: Document validation services

The organisation/individual information would be entered into the index as follows:

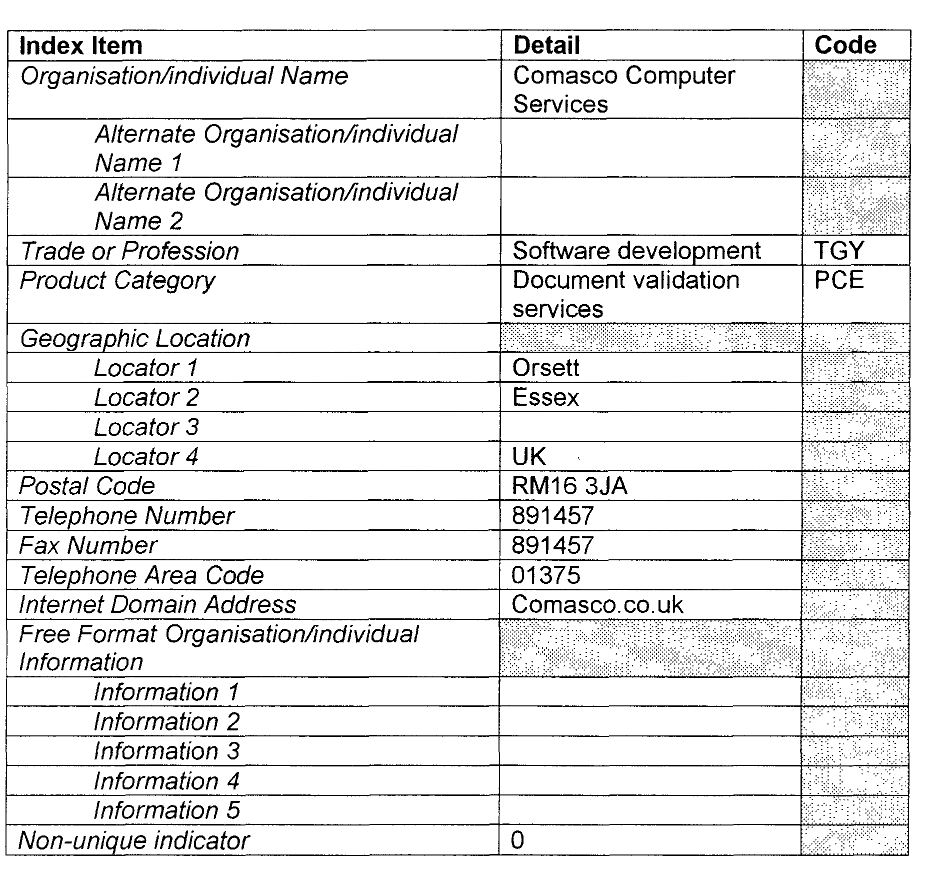

### Searching the Index

Once created the index can be searched either electronically or manually to locate organisation/individual information by using any of the following criterion or combination of criterion:
*Organisation/individual Name or part thereof*
*Trade or Profession*
*Product Category*
*Geographic Location*
*Postal Code*
*Telephone Number*
*Fax Number*
*Telephone Area Code*
*Internet Domain Address*
*Keywords relating to the organisation/individual or its business*

Matching one or more of these fields gives a user of the index a means of narrowing down a search rapidly to present the index entries that match his/her requirements.

### Example of use of the Preferred Embodiment

A person wishing to locate a organisation/individual, a service, product or Internet web address can use the index to locate the information he/she needs, for example:

A user wishes to locate an organisation/individual connected to computers and that is located in the geographic region known as Essex.

Manually, the user may search the index to locate organisations/individuals listed as having a trade or profession relating to computers and then review that list to find entries having a locator of Essex.

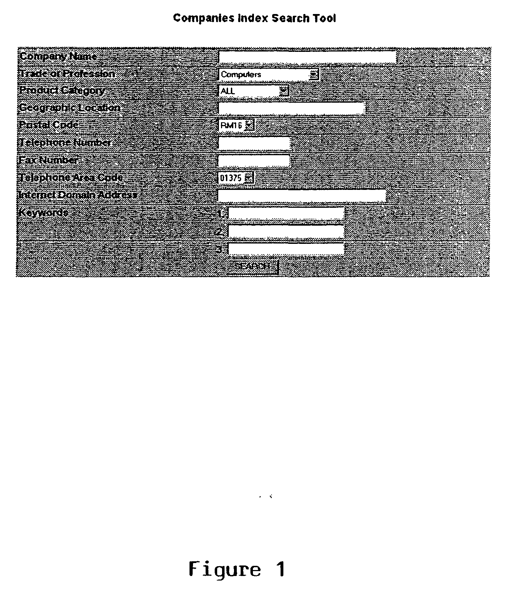

Alternatively, an electronic search tool could be offered to facilitate searching, this would have an appearance similar to Figure 1.

Following the input of one or more criteria, a results screen is displayed listing all organisation/individuals for whom matching information could be located in the organisation/individuals index.

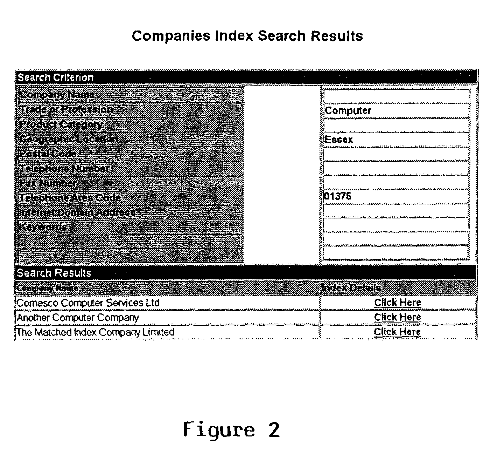

An example of how this information might be presented is given in Figure 2.

In summary, the preferred embodiment provides a system for correlating virtual addresses such as may be provided for Internet or world-wide web use with physical addresses of the associated entities. This will enable users not only to determine the actual location of a virtual (e-mail or web site) address but also to locate businesses in particular physical locations and then carry out transactions electronically, such as via the businesses' web site or by using e-mail. There can be many instances in which the latter situation may be preferable, for example to allow visiting of the entity concerned in case the potential customer wishes to view goods prior to purchase or to establish other details which may not be readily established electronically. It could also be used to filter the types of organisation such as in which the country customer wishes to do business to select only those which, for example, lie in a particular legal jurisdiction of interest to the customer to ensure that local legal redress is available. For example, a potential customer living in England may wish to deal only with companies having a place of business in England so that any commercial transactions with that company fall under English law.

It is envisaged also that the system could be used to warn potential customers of any companies or organisations having a virtual address but no corresponding published physical address or having a physical address with a business location in a country in which possible legal redress is not available, for example in a country which has no diplomatic or legal links with the customer's home country. Such warnings could be provided by a suitable flag in the Search Results Display.

The disclosures in British patent application no. 0004190.5, from which this application claims priority, and in the abstract accompanying this application are incorporated herein by reference.

## Claims

1. An indexation system including virtual address means for providing a virtual address of an entity, physical location means operable to provide data relating to a physical location associated with that entity, means for searching one or the other of the virtual and physical addresses and means provide the other of the virtual and physical addresses.

2. An indexation system according to claim 1, wherein the physical location means is designed to provide location by a combination of some or all of geographical district, telephone area code and organisation or individual name.

3. An indexation system according to claim 1 or 2, including trade identification means designed to provide an indication of trade or service category.

4. An indexation system according to claim 1, 2 or 3, including name indicating means designed to supply the legal and/or trading name of the organisation and/or individual together with the virtual address.

5. An indexation system according to any preceding claim, including warning means operable to warn of one or more of the absence of a legal or trading name, of the absence of details of a physical address and of physical location in a legal jurisdiction in which possible legal redress is not available.

6. An indexation system according to any preceding claim, including a database provided with a plurality of fields for storing in respective fields data relating to virtual address, physical location, trade or service category.

7. An indexation system according to claim 6, wherein each said field of the database is individually searchable.

8. An indexation system according to any preceding claim, including transmission means operable to transmit data to a remotely located user.

9. An indexation system according to claim 8, wherein the transmission means is operable to provide transmission over the Internet.
